# EUROPÄISCHE PATENTSCHRIFT

(11) **EP 1 975 454 B1**
(45) Veröffentlichungstag und Bekanntmachung des Hinweises auf die Patenterteilung: **05.03.2014**
(21) Anmeldenummer: 08012560.2
(22) Anmeldetag: 17.04.2004
(51) Int. Cl.: F16F 15/02, F16F 13/28, F16F 13/26, F16F 13/00, B60G 7/00, F16F 13/14, B62D 21/11

(54) **Vorrichtung zur Schwingungsdämpfung**
Device for vibration damping
Dispositif pour amortir les vibration

(30) Priorität: 27.06.2003 DE 10329037
(43) Veröffentlichungstag der Anmeldung: 01.10.2008
(62) Teilanmeldung aus: 04728109.2
(73) Patentinhaber: Audi AG, 85045 Ingolstadt (DE)
(72) Erfinder: Lamers, Stephan, 93336 Altmannstein (DE); Conrad, Thomas, 91757 Treuchtlingen (DE); Müller, Matthias, 85101 Lenting (DE); Unger, Wolfgang, 85080 Gaimersheim (DE); Wenger, Josef, 86529 Schrobenhausen (DE); Hudler, Roland, 85077 Manching (DE)
(74) Vertreter: Asch, Konrad

(56) Entgegenhaltungen:
- DE-A- 3 529 178
- US-A- 4 687 223
- US-A- 4 858 899
- US-A- 5 259 600
- US-A- 5 816 587
- US-A1- 2003 034 624
- PATENT ABSTRACTS OF JAPAN Bd. 0170, Nr. 12 (M-1351), 11. Januar 1993 (1993-01-11) & JP 04 243613 A (MITSUBISHI MOTORS CORP), 31. August 1992 (1992-08-31)
- PATENT ABSTRACTS OF JAPAN Bd. 0124, Nr. 45 (M-767), 22. November 1988 (1988-11-22) & JP 63 176843 A (TOKAI RUBBER IND LTD), 21. Juli 1988 (1988-07-21)
- PATENT ABSTRACTS OF JAPAN Bd. 0093, Nr. 03 (M-434), 30. November 1985 (1985-11-30) & JP 60 139508 A (NISSAN JIDOSHA KK), 24. Juli 1985 (1985-07-24)
- PATENT ABSTRACTS OF JAPAN Bd. 0102, Nr. 11 (M-501), 24. Juli 1986 (1986-07-24) & JP 61 050810 A (MAZDA MOTOR CORP), 13. März 1986 (1986-03-13)

## Beschreibung

Die Erfindung betrifft eine Vorrichtung zur Schwingungsdämpfung an einem Fahrwerkslager für Kraftfahrzeuge nach dem Oberbegriff des Anspruches 1.

Fahrwerklager für Kraftfahrzeuge sind in der Regel Gummi-Metall-Hülsenlager mit definierter Kennung hinsichtlich deren Steifigkeit und Dämpfungseigenschaften, wobei die gewählte Kennung zumeist einen Kompromiss zwischen Fahrkomfort, Schwingungsisolation und dynamischer Steifigkeit darstellt. Auch zusätzlich hydraulisch gedämpfte Fahrwerklager sind bekannt, die den gestellten Anforderungen an Fahrkomfort, Geräuschisolierung, etc. noch verbessert Rechnung tragen.

Durch die DE 101 17 305 ist ferner ein Verfahren beschrieben, bei dem zur Verminderung der Schallübertragung ein Schwingungssensor die störenden, von der Fahrbahn angeregten Schwingungen erfasst. Eine Vorrichtung zur Frequenzanalyse ermittelt die stärksten harmonischen Anregungen. Mindestens ein Fehlersensor misst die Restschwingungen, die über das Fahrwerkslager noch auf den Wagenkasten übertragen werden. Diese Restschwingungen werden durch Überlagerung von Gegenschwingungen eines Aktuators, insbesondere eines Piezoaktuators, minimiert.

Weiter ist aus der US 4,858,899 ein schwingungsdämpfendes Fahrwerklager bekannt, das Sensoren zur Fahrzustandserfassung und zur Erfassung der Fahrbahnbeschaffenheit aufweist. Ein Steuergerät verarbeitet die erfassten Signale und gibt durch Öffnen und Schließen eines Durchlasses unterschiedliche Steifigkeiten des Fahrwerklagers und damit ein unterschiedliches Dämpfungsverhalten vor. Konkret weist das Fahrwerklager eine Außenhülse und eine Innenhülse auf, zwischen denen ein Elastomerkörper als gummielastischer Tragkörper angeordnet ist. In diesem gummielastischen Tragkörper sind zwei Arbeitskammern ausgebildet, die zur Einstellung einer gewünschten Lagerhärte über entsprechende Fluidkanäle mit einem Fluid beaufschlagt werden können.

Aufgabe der Erfindung ist es, eine alternative Vorrichtung zur Schwingungsdämpfung an einem Fahrwerklager aufzuzeigen, mit der die Kennung des Fahrwerklagers auf einfache Weise zwischen verschiedenen Richtungen, insbesondere zwischen einer axialen und einer radialen Richtung umgeschalten werden kann.

Diese Aufgabe wird mit den Merkmalen des Patentanspruches 1 gelöst. Vorteilhafte Weiterbildungen sind Gegenstand der Unteransprüche.

Gemäß Anspruch 1 weist die Vorrichtung Sensoren zur Fahrzustandserfassung des Kraftfahrzeuges und zur Fahrbahnbeschaffenheit auf und wirkt mit einem elektronischen Steuergerät zur Verarbeitung der erfassten Signale und zur Auswahl verschiedener steuerbarer Kennlinien zusammen, welches Steuergerät zumindest ein in seiner Steifigkeit und/oder Dämpfung (Verlustwinkel) veränderbares Fahrwerkslager ansteuert. Das Fahrwerkslager kann bevorzugt zumindest ein elastisches Lager eines Hilfsrahmens (auch Fahrschemel oder Achsträger genannt) sein. Das Fahrwerklager weist eine Außenhülse und eine Innenhülse auf, zwischen denen gummielastische Dämpfungsmittel vorgesehen sind, wobei zwischen den Dämpfungsmitteln die dynamische Steifigkeit und die Dämpfungswirkung des Fahrwerkslagers durch Umschaltmittel verändernde, hydraulisch wirkende Arbeitskammern gebildet sind. Erfindungsgemäß wirken die einen Arbeitskammern in axialer Richtung und die anderen Arbeitskammern in radialer Richtung und können beide Arbeitskammern über durch die Umschaltmittel veränderbare Drosselelemente in zwei Dämpfungs-Wirkstellungen umschaltbar sein. Damit wirkt das Fahrwerkslager bei entsprechender Einbauanordnung in der Hochrichtung (Z-Richtung), sowie in Längsrichtung (X-Richtung) und Querrichtung (Y-Richtung) des Kraftfahrzeuges bei entsprechender Schwingungsanregung.

Bevorzugt kann das Fahrwerkslager in vier verschiedene Kennlinien von kleiner Steifigkeit und kleiner Dämpfung in große Steifigkeit und große Dämpfung umschaltbar sein. Damit sind bei noch vertretbarem konstruktiven Aufwand den zumeist auftretenden Fahrzuständen und Fahrbahnverhältnissen Rechnung tragende Kennlinienanpassungen gegeben, die einen weiten Frequenzbereich der Schwingungsanregungen abdecken.

Die Umschaltmittel können bevorzugt elektromagnetisch betätigbare Schieber sein, die die besagten Verbindungen auf- oder zusteuern. Dabei kann die konstruktive Auslegung so sein, dass die jeweils "harte" Kennlinie (sportliche Auslegung) im stromlosen Zustand der Schieber (z.B. federbeaufschlagt) gegeben ist, um bei Ausfall des Systems die Fahrsicherheit des Kraftfahrzeuges in fahrdynamischen Grenzfällen sicherzustellen, während die den Fahrkomfort erhöhenden, "weicheren" Lagerkennungen durch entsprechende elektromagnetische Betätigung über das Steuergerät gesteuert sind.

Der Fahrzustand des Kraftfahrzeuges und/oder die Fahrbahnbeschaffenheit kann hierbei über Sensoren erfasst werden, wobei das zumindest eine Fahrwerkslager zur Veränderung dessen Steifigkeit und/oder Dämpfung abhängig von den erfassten Parametern auf verschiedene Kennlinien verändert wird. Dementsprechend werden die Fahrbahnanregungen erfasst, signaltechnisch verarbeitet und das Fahrwerklager durch entsprechende Auswertung der Frequenzspektren auf die von den vorgegebenen Kennlinien am besten geeigneten Kennlinien eingestellt.

Das Fahrwerklager kann bevorzugt auf unterschiedliche Kennlinien umgeschaltet werden, z.B. durch Aktivierung oder Deaktivierung von Drosselelementen in hydraulischen Dämpfungseinrichtungen der Fahrwerkslager und/oder durch Zuschaltung von Zusatzfedern zur Erhöhung der dynamischen Steifigkeit.
Dem Fahrwerklager kann dabei abhängig von der Fahrbahnbeschaffenheit eine Gegenschwingung überlagert werden, um beispielsweise hochfrequente Schwingungsanteile zu löschen bzw. entsprechende Störgeräusche zu eliminieren.

Weiter kann bei definierten Fahrzuständen des Kraftfahrzeuges eine die Fahrsicherheit erhöhende Einstellung der Fahrwerklager bevorrangt werden. Dies kann z. B. der Fall sein bei einer starken Abbremsung des Kraftfahrzeuges oder bei hohen Kurvengeschwindigkeiten; hier ist eine "härtere Kennung" der Fahrwerklager aus Fahrsicherheitsgründen vorzuziehen. Die entsprechenden Fahrzustände können über Signale von Radsensoren, Bremslichtschalter, etc. abgeleitet werden, wobei ggf. die Signale von im Kraftfahrzeug bereits vorhandenen Einrichtungen wie ABS, ESP, etc. mit verwertet werden können.

Bei mehreren Fahrwerklagern mit Überlagerung einer Gegenschwingung können die Fahrwerklager getrennt und abhängig von deren spezifischer Schwingungsanregung von der Fahrbahn getrennt angesteuert werden. Dies erlaubt eine noch feinfühligere und noch spezifischer auf die auftretenden Fahrzustände abstimmbare Regelung der Kennlinien der Fahrwerkslager; z.B. können beim Durchfahren von Kurven die kurvenäußeren Fahrwerkslager "härter" als die kurveninneren eingestellt werden.

Besonders vorteilhaft kann weiterhin über Weg- und/oder Beschleunigungssensoren die Fahrbahnbeschaffenheit an der Vorderachse des Kraftfahrzeuges erfasst werden, dann die entsprechenden Signale in einem Steuergerät verarbeitet werden und schließlich die Fahrwerkslager über Leistungsverstärker elektrisch, elektromagnetisch und/oder über Piezoelemente beaufschlagt werden. Bei entsprechender Echtzeitverarbeitung können somit die an der Vorderachse erfassten Stoßanregungen durch eine entsprechend schnelle Kennlinienanpassung der Fahrwerkslager wirkungsvoll gedämpft und eliminiert werden.

Des Weiteren kann bei an der Vorderachse des Kraftfahrzeuges erfasster, unregelmäßiger Stoßanregung eine schnelle Änderung der Kennlinie (Verminderung deren dynamischer Steifigkeit) zumindest eines Fahrwerklagers an der Hinterachse gesteuert werden, wodurch eine deutlich spürbare Verbesserung des Fahrkomforts des Kraftfahrzeuges erzielbar ist.

Die Erfindung wird im Folgenden mit weiteren Einzelheiten näher beschrieben.

Es zeigen:
**Fig. 1** eine Draufsicht auf ein Fahrwerk eines Kraftfahrzeuges mit einem vorderen und hinteren Hilfsrahmen und schwingungsdämpfenden Fahrwerkslagern bzw. Hilfsrahmenlager, deren Kennlinien über ein elektronisches Steuergerät veränderbar sind;
**Fig. 2** ein erstes Fahrwerkslager mit in axialer und radialer Richtung wirksamer, hydraulischer Dämpfungseinrichtung mit Umschaltung der Kennlinien in der dynamischen Steifigkeit und der Dämpfung (Verlustwinkel), in einem Längsschnitt;
**Fig. 3** das Fahrwerkslager nach Fig. 2 in einer Ansicht gemäß Linie III - III der Fig. 2;
**Fig. 4** das Fahrwerkslager nach Fig. 2 in einem Querschnitt gemäß Linie IV - IV der Fig. 2;
**Fig. 5a** **und b** die umschaltbaren Kennlinien 1 bis 4 der Dämpfung (Verlustwinkel) und dynamischen Steifigkeit des Fahrwerkslagers nach den Fig. 2 bis 4;
**Fig. 6** ein Ersatzschaltbild des Fahrwerkslagers nach den Fig. 2 bis 4;
**Fig. 7** ein Blockschaltbild der Kennlinienumschaltung des Fahrwerkslagers nach den Fig. 1 bis 6 über ein elektronisches Steuergerät.

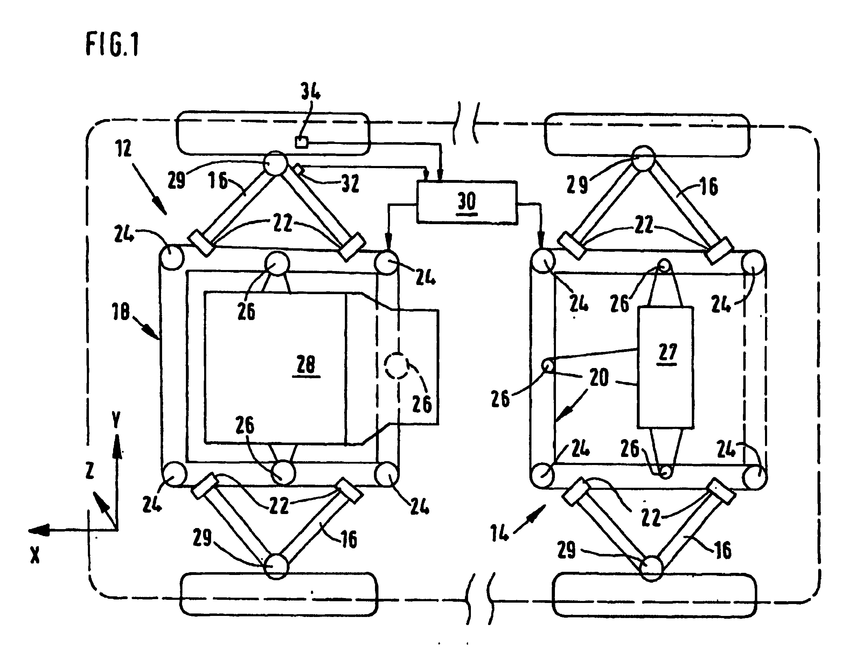

In der **Fig. 1** ist grob schematisch eine Draufsicht eines Kraftfahrzeuges dargestellt, mit einer Vorderachse 12 und einer Hinterachse 14. Die nicht mit Bezugszeichen versehenen Räder des Kraftfahrzeuges sind über unabhängige Radaufhängungen (im Detail nicht beschrieben) mit der Karosserie des Kraftfahrzeuges in bekannter Weise verbunden.

Dabei sind untere Querlenker (allgemein mit 16 bezeichnet) an einem vorderen und einem hinteren Hilfsrahmen 18, 20 über Fahrwerkslager (allgemein mit 22 bezeichnet) befestigt. Die Räder sind mittels Fahrwerkslager 29 mit den Querlenkern 16 verbunden. Die schwingungsdämpfenden Fahrwerkslager 22 und 29 in den Querlenkern 16 (untere Lenker (Trag- und Führungslenker) und obere Lenker) lassen bedingt eine kardanische Bewegung zu, sind aber nicht generell schwenkbar gelagert. Die Lenkung des Rades kann über eine Spurstange und Radträger erfolgen (hier nicht mit dargestellt).

Ferner sind die Hilfsrahmen 18, 20 über Fahrwerkslager bzw. Hilfsrahmenlager (allgemein mit 24 bezeichnet) mit der Karosserie des Kraftfahrzeuges schwingungsisoliert verbunden.

Der vordere Hilfsrahmen 18 trägt zudem über schwingungsisolierende Aggregatelager 26 das aus Brennkraftmaschine und Geschwindigkeits-Wechselgetriebe bestehende Antriebsaggregat 28. Der hintere Hilfsrahmen 20 kann bei einem allradgetriebenen Kraftfahrzeug zudem ein Hinterachsdifferential 27 über schwingungsisolierende Aggregatelager 26 tragen.

Die in verschiedenen Kennlinien umschaltbaren Fahrwerkslager 24 (es könnten aber auch die Fahrwerkslager 22 und/oder die Fahrwerkslager 29 und/oder die Aggregatelager 26 sein) werden über ein elektronisches Steuergerät 30 angesteuert, das über elektrische Leitungen mit z. B. Weg-Beschleunigungssensoren 32 (vgl. anhand des rechten Vorderrades des Kraftfahrzeuges) an den Querlenkern 16 und mit z. B. Drehzahlsensoren 34 an den Rädern des Kraftfahrzeuges verbunden ist. Die besagten Sensoren 32, 34 können im Kraftfahrzeug bereits vorhandene Sensoren anderer elektronischer Regelsysteme sein. Die Signalverarbeitung und weitere Eingabeparameter des Steuergerätes 30 sind im nachfolgenden noch näher beschrieben.

Die auf die Fahrwerkslager 24 einwirkenden Schwingungsanregungen treten in der Hochachse bzw. in Z-Richtung, in der Längsachse bzw. in X-Richtung und abhängig vom Anwendungsfall in der Querrichtung des Kraftfahrzeuges bzw. in Y-Richtung auf (vgl. die eingezeichneten Richtungspfeile).

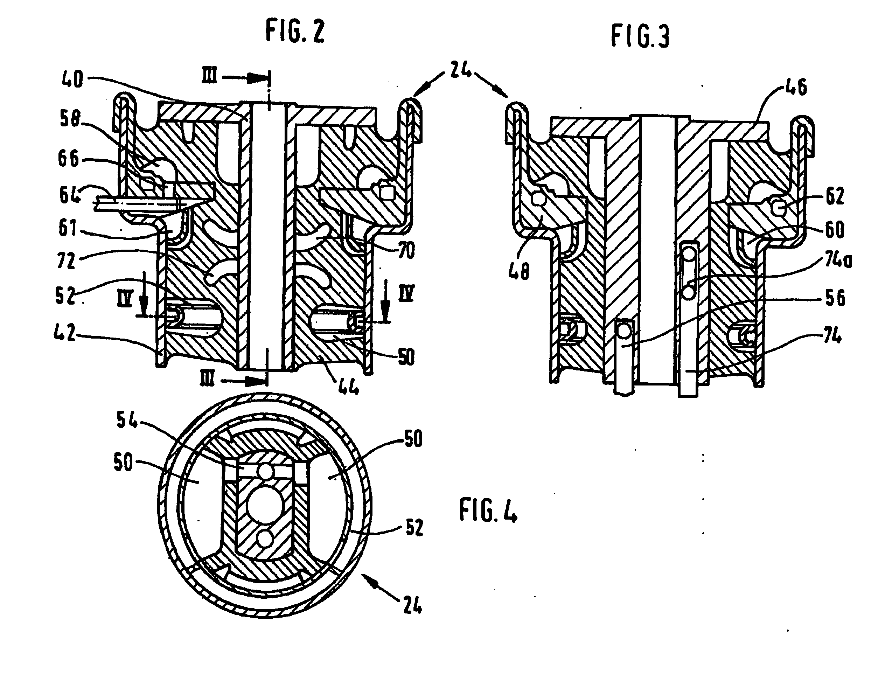

Mit Bezug zu den **Fig. 2 bis 4** ist eines der Fahrwerkslager 24 beschrieben, die anderen Fahrwerkslager 24 können identisch ausgebildet und ebenfalls entsprechend von dem Steuergerät 30 parallel oder individuell angesteuert sein.

Das Fahrwerkslager 24 setzt sich im wesentlichen zusammen aus einer im Querschnitt etwa rechteckigen Innenhülse 40, einer rotationssymmetrischen Außenhülse 42 und einem dazwischen liegenden Tragkörper 44 aus gummielastischem Material. In der Einbauanordnung liegt die Mittelachse der Innenhülse 40 in der besagten Z-Richtung.

Ferner ist an der Innenhülse 40 eine Anschlagtasse 46 befestigt, die einer mit der Außenhülse 42 fest verbundenen, radial nach innen ragenden Zwischenwand 48 gegenüber liegt.

In dem Tragkörper 44 sind zwei mit Hydrauliköl befüllte Arbeitskammern 50 als erste hydraulische Dämpfungseinheit ausgebildet, die sich diametral in X-Richtung gegenüberliegen und die über einen ringförmigen Drosselkanal 52 als erstes Drosselelement und über einen Kurzschlusskanal 54 als zweites, einen geringeren Strömungswiderstand aufweisendes Drosselelement miteinander über entsprechende Durchtrittsöffnungen verbunden sind (vgl. **Fig. 4**). Der Kurzschlusskanal 54 ist mittels eines ersten Schiebers 56 auf- oder zusteuerbar, wobei dadurch zwei verschiedene Kennlinien in X-Richtung einstellbar sind.

Ferner sind in dem Tragkörper 44 zwei ringförmige Arbeitskammern 58, 60 als zweite hydraulische Dämpfungseinheit zwischen der Anschlagtasse 46 und beiderseits der Zwischenwand 48 angeordnet, die in Z-Richtung ebenfalls schwingungsdämpfend wirken. Dabei ist wiederum als erstes Drosselelement ein die beiden Arbeitskammern 58, 60 verbindender Ringkanal 62 und ein mittels eines zweiten Schiebers 64 auf- oder zusteuerbarer Kurzschlusskanal 66 vorgesehen, über den zwei weitere unterschiedliche Kennlinien des Fahrwerkslagers 24 in Z-Richtung einstellbar sind.

Schließlich sind in dem Tragkörper 44 vier weitere Arbeitskammern 70, 72 vorgesehen, die sich wie die Arbeitskammern 50 diametral gegenüber liegen, die wie die vorstehend beschriebenen Arbeitskammern 50 bzw. 58, 60 mit Hydrauliköl befüllt sind und die mittels eines dritten Schiebers 74 mit Durchtrittsöffnungen 74a entweder miteinander verbindbar oder voneinander trennbar sind. Bei getrennter Verbindung der beiden Arbeitskammern 70, 72 bilden diese aufgrund der Inkompressibilität des Hydrauliköls eine zunehmende Versteifung des Tragkörpers 44 in Z-Richtung des Fahrwerkslagers 24.

Das Fahrwerkslager 24 beinhaltet somit eine axial dämpfende Einheit (Arbeitskammern 58, 60) und eine radial dämpfende Einheit (Arbeitskammern 50). Bei Einfederung bzw. Schwingungsanregung in X-Richtung wird der Druckausgleich zwischen den zwei gegenüberliegenden Arbeitskammern 50 über die Flüssigkeitsströmung über den fest mit der Außenhülse 42 verbundenen, ringförmigen Drosselkanal 52 realisiert. Der Drosselkanal 52 ist auf einen maximalen Verlustwinkel (z.B. > 40 Grad) für den spürbaren Frequenzbereich von z.B. 13 Hz abgestimmt.

Bei geöffnetem Schieber 56 erfolgt der Volumenausgleich über den Kurzschlusskanal 54, wodurch die Dämpfung in X-Richtung deutlich reduziert wird.

Bei einer Auslenkung des Fahrwerkslagers 24 in Z-Richtung wird das Hydrauliköl von der Arbeitskammer 58 über den ringförmigen Drosselkanal 66 in die von einer Blähfeder 61 geringer Steifigkeit begrenzte Arbeitskammer 60 verdrängt und umgekehrt. Zur Verminderung der hydraulischen Dämpfung kann durch Aufsteuern des Kurzschlusskanales 62 über den Schieber 64 eine "weichere" Kennlinie geschaltet werden.

Die zuschaltbare Steifigkeit des Fahrwerklagers 24 in Z- und X-Richtung wird über die Arbeitskammern 70, 72 gesteuert, die in der einen Stellung des Schiebers 74 über Ausgleichsbohrungen 74a im Schieber 74 miteinander verbunden sind (entspricht einer "weichen" Kennung). Bei verschlossenen Ausgleichsbohrungen 74a ist das Fahrwerkslager 24 in X- und Y-Richtung verhärtet bzw. weist eine veränderte Kennlinie auf. Die Zusatzsteifigkeit kann so ausgelegt sein, dass im geschalteten Zustand die Steifigkeit doppelt so groß ist wie die Ausgangssteifigkeit des Fahrwerkslagers bei geöffneten Ausgleichsbohrungen 74a.

Das Betätigen der Schieber 56, 64, 74 kann z. B. über Elektromagnete (nicht dargestellt) bewerkstelligt werden, die von dem elektronischen Steuergerät 30 entsprechend angesteuert werden. Die Rückstellung in die jeweils "härtere" Kennlinie erfolgt z. B. durch Federkraft, so dass der Ansteuerstrom in einfacher Weise nur zu- oder abgeschaltet werden muss und bei Betriebsstörungen die jeweils "härteren" Kennlinien des Fahrwerkslagers 24 latent vorliegen.

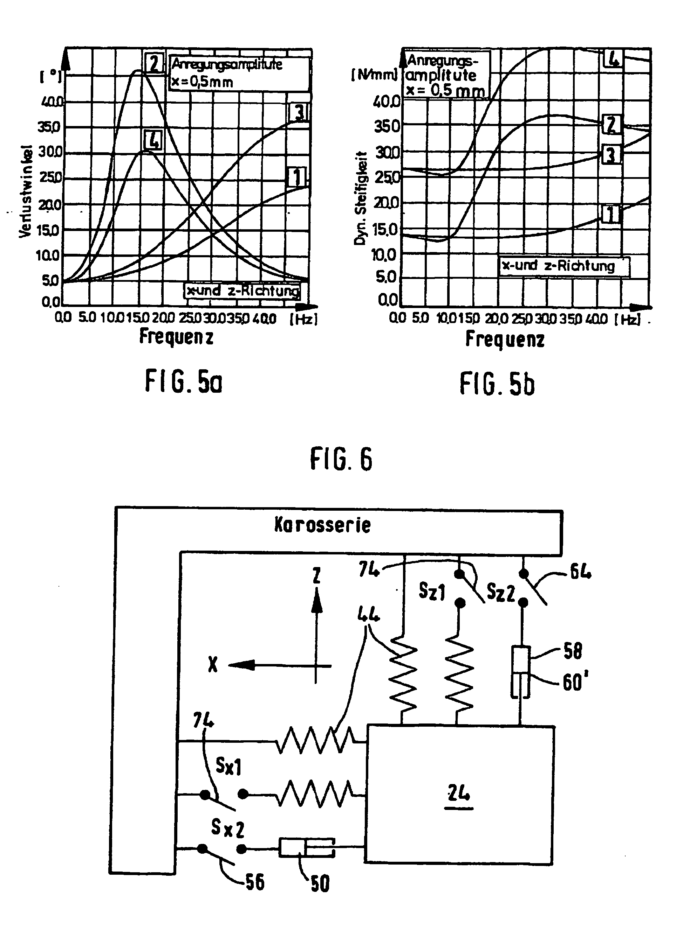

Die **Fig. 5a** **und b** zeigen die umschaltbaren Kennlinien 1 bis 4 des Fahrwerkslagers, die wie folgt klassifiziert sind:
Kennung 1 = Kleine Steifigkeit mit kleiner Dämpfung
Kennung 2 = Kleine Steifigkeit mit großer Dämpfung
Kennung 3 = Große Steifigkeit mit kleiner Dämpfung
Kennung 4 = Große Steifigkeit mit großer Dämpfung

Wie aus den beispielsweise erstellten Kennlinien 1 bis 4 ersichtlich ist, lassen sich durch entsprechende Betätigung der Schieber 56, 64 und 74 die entsprechenden Kennlinien und damit verbunden eine wirkungsvolle Schwingungsdämpfung und Geräuschisolation verwirklichen.

Es sei schließlich noch auf **Fig. 6** verwiesen, die ein Ersatzschaltbild des Fahrwerkslagers 24 darstellt. Die besagten Schieber 56, 64 und 74 sind dabei als Schalter dargestellt; ferner sind der funktionell als Feder wirkende Tragkörper 44 und die Dämpfungseinrichtungen in Form der besagten Arbeitskammern mit den gleichen Bezugszeichen versehen.

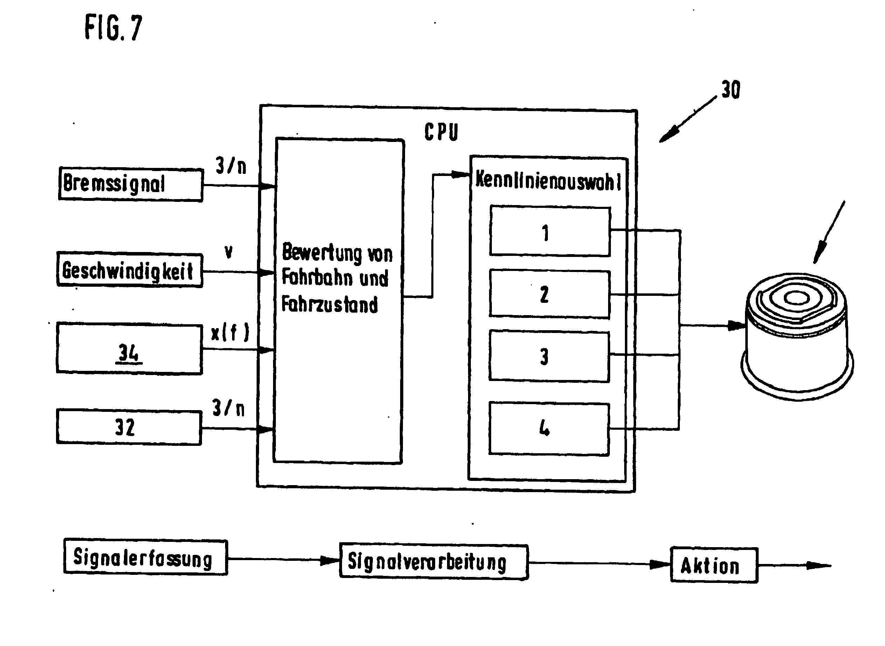

In der **Fig. 7** ist die Signalerfassung, die Signalverarbeitung in dem Steuergerät 30 und die Aktion bzw. die Umschaltung auf die verschiedenen Kennlinien 1 bis 4 dargestellt:

Dementsprechend werden dem Steuergerät 30 die Signale der Wegsensoren 32 an den Querlenkern 16, die Signale der Drehzahlsensoren 34 an den Rädern des Kraftfahrzeuges, ein Geschwindigkeitssignal und ein Bremssignal zugeführt und durch entsprechende signaltechnische Auswertung der Fahrzustand des Kraftfahrzeuges und die Fahrbahnbeschaffenheit ermittelt.

Aus diesen Daten erfolgt eine Kennlinienauswahl für das Fahrwerkslager 24 bzw. für individuelle oder alle Fahrwerkslager 24 (vgl. **Fig.1**).

Über Leistungsverstärker werden dann die entsprechenden Schieber 56, 64, 72 angesteuert und die ausgewählte Kennlinie 1, 2, 3 oder 4 eingestellt.

Darüber hinaus kann beispielsweise bei Überfahren eines Einzelhindernisses auf der Fahrbahn über den Wegsensor 32 an der Vorderachse 12 des Kraftfahrzeuges in Echtzeitsteuerung die Kennlinie der Fahrwerkslager 24 an der Hinterachse 14 z. B. auf kleine Steifigkeit und große Dämpfung (= Kennlinie 2) umgeschaltet werden. Damit wird einem sogenannten "Achsprellen" beim Überfahren des Hindernisses an der Hinterachse 14 entgegengewirkt und der Fahrkomfort erhöht. ("Achsprellen" = Beim Überfahren eines Hindernisses (z. B. Kanaldeckel, Bordstein, Kante) kann eine Achse schwingen).

Auf ebener, glatter Fahrbahn schaltet das Steuergerät 30 die Fahrwerkslager 24 z. B. auf die Kennlinie 1 bzw. auf kleine Steifigkeit und kleine Dämpfung. Abhängig von der Geschwindigkeit und der Fahrbahnbeschaffenheit werden dann nach entsprechender Signalauswertung im Steuergerät 30 die weiteren Kennlinien 2 bis 4 geschaltet.

Über eine Vorrangschaltung im Steuergerät 30 wird bei definierten Fahrzuständen des Kraftfahrzeuges, insbesondere bei einem schnellen Durchfahren von Kurven oder bei Bremsvorgängen, unabhängig von der Fahrbahnbeschaffenheit und zur Erhöhung der Fahrsicherheit eines oder mehrere der Fahrwerkslager 24 auf die Kennlinie 3 oder 4 umgeschaltet.

Zur Erkennung dieser definierten Fahrzustände können das Bremssignal z.B. eines Bremslichtschalters, Geschwindigkeitssignale und deren Ableitungen, Signale des Drehzahlsensors 34, Signale eines Lenkwinkelsensors der Lenkung des Kraftfahrzeuges, etc. herangezogen werden. Solche Signale können beispielsweise für Steuergeräte von Antiblockiersystemen oder Fahrstabilitätssystemen (ABS und/oder ESP) im Kraftfahrzeug ohnehin vorhanden sein und mit verwendet werden.

## Patentansprüche

1. Vorrichtung zur Schwingungsdämpfung, mit Sensoren zur Fahrzustandserfassung des Kraftfahrzeuges und zur Fahrbahnbeschaffenheit, mit einem elektronischen Steuergerät (30) zur Verarbeitung der erfassten Signale und zur Auswahl verschiedener steuerbarer Kennlinien und zumindest einem in seiner Steifigkeit und/oder Dämpfung veränderbaren Fahrwerklager (24), wobei das Fahrwerklager (24) eine Außenhülse (42) und eine Innenhülse (40) aufweist, zwischen denen zumindest ein gummielastischer Tragkörper (44) vorgesehen ist, und wobei in dem Tragkörper, die Steifigkeit und die Dämpfungswirkung des Fahrwerklagers (24) durch Umschaltmittel (56, 62, 74;) verändernd, hydraulisch wirkende Arbeitskammern (50, 58, 60, 70, 72) gebildet sind, **dadurch gekennzeichnet, dass** die einen Arbeitskammern (58, 60) in axialer Richtung und die anderen Arbeitskammern (70, 72) in radialer Richtung wirken und dass beide Arbeitskammern über durch die Umschaltmittel (56, 64, 74) veränderbare Drosselelemente (52, 54, 62, 66) in zwei Dämpfungs-Wirkstellungen umschaltbar sind.

2. Vorrichtung nach Anspruch 1, **dadurch gekennzeichnet, dass** das Fahrwerklager (24) in vier verschiedenen Kennlinien (1 bis 4) von kleiner Steifigkeit und kleiner Dämpfung in große Steifigkeit und große Dämpfung umschaltbar ist.

3. Vorrichtung nach Anspruch 1 oder 2, **dadurch gekennzeichnet, dass** die radial wirkenden Arbeitskammern (50) innerhalb des gummielastischen Tragkörpers (44) des Fahrwerkslagers (24) angeordnet sind, wobei die Verbindung zwischen den Arbeitskammern entweder über einen ringförmigen Drosselkanal (52) größerer Drosselwirkung oder über einen Kurzschlusskanal (54) mit geringerer Drosselwirkung steuerbar ist.

4. Vorrichtung nach einem der Ansprüche 1 bis 3, **dadurch gekennzeichnet, dass** die axial wirkenden Arbeitskammern (58, 60) innerhalb des gummielastischen Tragkörpers (44) des Fahrwerkslagers (24) angeordnet sind und dass die Verbindung zwischen den Arbeitskammern entweder über einen ringförmigen Drosselkanal (62) größerer Dämpfungswirkung oder über einen Kurzschlusskanal (66) mit geringerer Dämpfungswirkung steuerbar ist.

5. Vorrichtung nach einem der Ansprüche 1 bis 4, **dadurch gekennzeichnet, dass** die die Steifigkeit des Fahrwerklagers (24) verändernden, hydraulischen Arbeitskammern (70, 72) innerhalb des gummielastischen Tragkörpers (44) des Fahrwerkslager (24) angeordnet sind und dass die Verbindung zwischen den Arbeitskammern auf- oder zusteuerbar ist.

6. Vorrichtung nach einem der Ansprüche 1 bis 5, **dadurch gekennzeichnet, dass** die Umschaltmittel elektromagnetisch betätigbare Schieber (56, 64, 74) sind, die die besagten Verbindungen auf- oder zusteuern.

7. Vorrichtung nach einem der Ansprüche 1 bis 6, **dadurch gekennzeichnet, dass** das Fahrwerkslager (24) ein oder mehrere Hilfsrahmenlager eines an der Vorderachse (12) und/oder der Hinterachse (14) des Kraftfahrzeuges angeordneten Hilfsrahmens ist.

8. Vorrichtung nach einem der Ansprüche 1 bis 7, **dadurch gekennzeichnet, dass** das Fahrwerkslager (22, 29) ein oder mehrere Lenkerlager eines an der Vorderachse (12) und/oder der Hinterachse (14) des Kraftfahrzeuges angeordneten Querlenkers (16) ist.

## Claims

1. Device for vibration damping, comprising sensors for detecting the driving state of the motor vehicle and the condition of the carriageway, comprising an electronic control unit (30) for processing the detected signals and for selecting various controllable characteristic curves, and at least one chassis mounting (24), the stiffness and/or damping of which can be modified, the chassis mounting (24) having an outer bush (42) and an inner bush (40), between which at least one rubber-resilient supporting body (44) is provided, and hydraulically acting working chambers (50, 58, 60, 70, 72) being formed in the supporting body, which chambers modify the stiffness and the damping effect of the chassis mounting (24) by switchover means (56, 62, 74), **characterised in that** one set of working chambers (58, 60) act in the axial direction and the other set of working chambers (70, 72) act in the radial direction, and **in that** all the working chambers can be switched into two operative damping positions by way of restriction elements (52, 54, 62, 66) which can be modified by the switchover means (56, 64, 74).

2. Device according to claim 1, **characterised in that** the chassis mounting (24) can be switched in four different characteristic curves (1 to 4) from low stiffness and low damping to high stiffness and high damping.

3. Device according to either claim 1 or claim 2, **characterised in that** the radially acting working chambers (50) are arranged within the rubber-resilient supporting body (44) of the chassis mounting (24), the connection between the working chambers being controllable either by way of an annular restriction passage (52) having a larger restriction effect or by way of a short-circuit passage (54) having a smaller restriction effect.

4. Device according to any of claims 1 to 3, **characterised in that** the axially acting working chambers (58, 60) are arranged within the rubber-resilient supporting body (44) of the chassis mounting (24), and **in that** the connection between the working chambers can be controlled either by way of an annular restriction passage (62) having a larger damping effect or by way of a short-circuit passage (66) having a smaller damping effect.

5. Device according to any of claims 1 to 4, **characterised in that** the hydraulic working chambers (70, 72) which modify the stiffness of the chassis mounting (24) are arranged within the rubber-resilient supporting body (44) of the chassis mounting (24), and **in that** the connection between the working chambers can be opened or closed.

6. Device according to any of claims 1 to 5, **characterised in that** the switchover means are electromagnetically actuatable sliders (56, 64, 74) which open or close said connections.

7. Device according to any of claims 1 to 6, **characterised in that** the chassis mounting (24) is one or more subframe mountings of a subframe arranged on the front axle (12) and/or the rear axle (14) of the motor vehicle.

8. Device according to any of claims 1 to 7, **characterised in that** the chassis mounting (22, 29) is one or more link mountings of a transverse link (16) arranged on the front axle (12) and/or the rear axle (14) of the motor vehicle.

## Revendications

1. Dispositif pour amortir les vibrations, comportant des capteurs pour saisir l'état de marche du véhicule automobile et l'état de surface de la route, un appareil de commande électronique (30) pour traiter les signaux acquis et pour sélectionner diverses courbes caractéristiques réglables et au moins une suspension (24) modifiable au plan de la rigidité et/ou de l'amortissement, dans lequel la suspension (24) présente une douille externe (42) et une douille interne (40) entre lesquelles il est prévu au moins un corps porteur de caoutchouc élastique (44) et dans lequel il est formé, dans le corps porteur, des chambres de travail (50, 58, 60, 70, 72) à action hydraulique modifiant la rigidité et l'effet d'amortissement de la suspension (24) par des moyens de commutation (56, 62, 74), **caractérisé en ce que** les premières chambres de travail (58, 60) opèrent dans la direction axiale et les autres chambres de travail (70, 72) dans la direction radiale et **en ce que** les deux types de chambres de travail peuvent être commutés dans deux positions actives d'amortissement via des éléments d'étranglement (52, 54, 62, 66) modifiables par les moyens de commutation (56, 64, 74).

2. Dispositif selon la revendication 1, **caractérisé en ce que** la suspension (24) peut être commutée sur quatre courbes caractéristiques (1 à 4) de faible rigidité et faible amortissement à forte rigidité et fort amortissement.

3. Dispositif selon la revendication 1 ou la revendication 2, **caractérisé en ce que** les chambres de travail (50) agissant radialement sont aménagées à l'intérieur du corps porteur de caoutchouc élastique (44) de la suspension (24), dans lequel la liaison entre les chambres de travail peut être commandée via un canal d'étranglement annulaire (52) de plus grand effet d'étranglement ou via un canal de court-circuit (54) de plus faible effet d'étranglement.

4. Dispositif selon l'une quelconque des revendications 1 à 3, **caractérisé en ce que** les chambres de travail (58, 60) agissant axialement sont aménagées à l'intérieur du corps porteur de caoutchouc élastique (44) de la suspension (24) et **en ce que** la liaison entre les chambres de travail peut être commandée via un canal d'étranglement annulaire (62) de plus grand effet d'amortissement ou via un canal de court-circuit (66) de plus faible effet d'amortissement.

5. Dispositif selon l'une quelconque des revendications 1 à 4, **caractérisé en ce que** les chambres de travail hydrauliques (70, 72) modifiant la rigidité de la suspension (24) sont agencées à l'intérieur du corps porteur de caoutchouc élastique (44) de la suspension (24) et **en ce que** la liaison entre les chambres de travail peut être ouverte ou fermée.

6. Dispositif selon l'une quelconque des revendications 1 à 5, **caractérisé en ce que** les moyens de commutation sont des curseurs (56, 64, 74) qui peuvent être commandés par voie électromagnétique et qui ouvrent ou ferment lesdites liaisons.

7. Dispositif selon l'une quelconque des revendications 1 à 6, **caractérisé en ce que** la suspension (24) est formée d'une ou plusieurs suspensions auxiliaires d'un châssis auxiliaire aménagé sur l'essieu avant (12) et/ou sur l'essieu arrière (14) du véhicule automobile.

8. Dispositif selon l'une quelconque des revendications 1 à 7, **caractérisé en ce que** la suspension (22, 29) est formée d'un ou plusieurs supports de bielles d'une traverse (16) aménagée sur l'essieu avant (12) et/ou sur l'essieu arrière (14) du véhicule automobile.
